# EUROPEAN PATENT SPECIFICATION

(11) **EP 1 394 786 B1**
(45) Date of publication and mention of the grant of the patent: **01.03.2006**
(21) Application number: 03017624.2
(22) Date of filing: 11.08.2003
(51) Int. Cl.: G11B 7/24

(54) **Optical recording medium and method for optically recording data in the same**
Optisches Aufzeichnungsmedium und Verfahren zum Aufzeichnen optischer Daten auf demselben
Support d'enregistrement optique et procédé d'enregistrement des données optiques sur lemême

(30) Priority: 12.08.2002 JP 2002234281
(43) Date of publication of application: 03.03.2004
(73) Proprietor: TDK Corporation, Tokyo 103-8272 (JP)
(72) Inventor: Aoshima, Masaki, TDK Corporation, Tokyo 103-8272 (JP); Inoue, Hiroyasu, TDK Corporation, Tokyo 103-8272 (JP); Mishima, Koji, TDK Corporation, Tokyo 103-8272 (JP)
(74) Representative: HOFFMANN EITLE

(56) References cited:
- EP-A- 0 947 351
- US-A- 4 357 616
- US-A- 4 477 819
- US-A- 4 772 897
- US-A- 5 297 132
- US-A1- 2001 044 002
- US-A1- 2002 076 646
- US-B1- 6 210 860

## Description

### BACKGROUND OF THE INVENTION

The present invention relates to an optical recording medium and a method for optically recording data in the optical recording medium and, particularly, to an optical recording medium constituted so as to record data therein and reproduce data therefrom by projecting a laser beam having a wavelength of 350 nm to 450 nm thereonto, which includes two or more recording layers and is capable of decreasing noise level and improving C/N ratio of a reproduced signal, and a method for optically recording data in the same.

### DESCRIPTION OF THE PRIOR ART

Optical recording media such as the CD, DVD and the like have been widely used as recording media for recording digital data. These optical recording media can be roughly classified into optical recording media such as the CD-ROM and the DVD-ROM that do not enable writing and rewriting of data (ROM type optical recording media), optical recording media such as the CD-R and DVD-R that enable writing but not rewriting of data (write-once type optical recording media), and optical recording media such as the CD-RW and DVD-RW that enable rewriting of data (data rewritable type optical recording media).

As well known in the art, data are generally recorded in a ROM type optical recording medium using prepits formed in a substrate in the manufacturing process thereof, while in a data rewritable type optical recording medium a phase change material is generally used as the material of the recording layer and data are recorded utilizing changes in an optical characteristic caused by phase change of the phase change material.

On the other hand, in a write-once type optical recording medium, an organic dye such as a cyanine dye, phthalocyanine dye or azo dye is generally used as the material of the recording layer and data are recorded utilizing changes in an optical characteristic caused by chemical change of the organic dye, which change may be accompanied by physical deformation.

However, since an organic dye is degraded when exposed to sunlight or the like, it is difficult to improve long-time storage reliability in the case where an organic dye is used as the material of the recording layer. Therefore, it is desirable for improving long-time storage reliability of the write-once type optical recording medium to form the recording layer of a material other than an organic dye.

As disclosed in Japanese Patent Application Laid Open No. 62-204442, an optical recording material formed by laminating two recording layers formed of an inorganic material is known as an example of an optical recording medium whose recording layer is formed of a material other than an organic dye.

On the other hand, a next-generation type optical recording medium that offers improved recording density and has an extremely high data transfer rate has been recently proposed.

In such a next-generation type optical recording medium, the achievement of increased recording capacity and extremely high data transfer rate inevitably requires the diameter of the laser beam spot used to record and reproduce data to be reduced to a very small size.

In order to reduce the laser beam spot diameter, it is necessary to increase the numerical aperture of the objective lens for condensing the laser beam to 0.7 or more, for example, to about 0.85, and to shorten the wavelength of the laser beam to 450 nm or less, for example, to about 400 nm.

Therefore, in forming a plurality of recording layers of an inorganic material, it is necessary to select an inorganic material capable of sufficiently absorbing a blue laser bean having a wavelength equal to or shorter than 450 nm.

US-A-4,477,819 describes an optical recording medium comprising adjacent thin layers of two different materials, which, upon marking with an energy beam, form a marked area comprising an alloy or mixture of the two materials. The optical properties of the marked area contrast sufficiently from the optical properties of the unmarked area, so that the marked area can be reliably sensed. One of the first of the thin layers comprises a metal and the other of the thin layers comprises a metal or a semiconductor. The metals are taken from the group comprising Al, Au, Pb and Sn, and the semiconductors are chosen from the group comprising Ge and Si.

US-A-2002/0076646 describes an optical information medium for high speed erasable recording by means of a laser-light beam. A substrate has a stack of layers with a first dielectric layer and a second dielectric layer, a phase-change recording layer between the first dielectric layer and the second dielectric layer, and a reflective layer. The recording layer has a compound of Ge and Te, and at least the first dielectric layer consists of oxides of Ta and Si, nitrides of Si and Al, or carbides of Si, and is in contact with the recording layer.

It is a result of the present invention to provide an optical recording medium constituted so as to record data therein and reproduce data therefrom by projecting a laser beam having a wavelength of 350 nm to 450 nm thereonto, which includes two or more recording layers and is capable of decreasing noise level and improving C/N ratio of a reproduced signal, and a method for optically recording data in the same.

The inventors of the present invention vigorously pursued a study for accomplishing the above objects and, as a result, made the discovery that each of C, Si and Ge is an inorganic material having a high light absorbance with respect to a laser beam having a wavelength of 350 nm to 450 nm and that when a laser bean is used to record data in an optical recording medium composed of a first recording layer containing an element selected from the group consisting of C, Si and Ge as a primary component and a second recording layer containing an element selected from the group consisting of C, Si and Ge and different from the element contained as a primary component in the first recording layer as a primary component and formed in the vicinity of the first recording layer, a mixed region including both the primary component element of the first recording layer and the primary component element of the second recording layer is formed to markedly change the region's reflection coefficient and enable data to be recorded with high sensitivity.

They further discovered that the noise level of a reproduced signal can be decreased to improve C/N ratio by utilizing the large difference in reflection coefficient between the mixed region including the primary component element of the first recording layer and the primary component element of the second recording layer, and the other regions.

The present invention can therefore be accomplished by an optical recording medium comprising a substrate, a first recording layer formed on the substrate and containing an element selected from the group consisting of C, Si, and Ge as a primary component, and a second recording layer located in the vicinity of the first recording layer and containing an element selected from the group consisting of C, Si, and Ge and different from the element contained as a primary component in the first recording layer as a primary component.

In the present invention, the statement that the first recording layer contains a certain element as a primary component means that the content of the element is maximum among the elements contained in the first recording layer, while the statement that the second recording layer contains a certain element as a primary component means that the content of the element is maximum among the elements contained in the second recording layer.

In the present invention, it is not absolutely necessary for the second recording layer to be in contact with the first recording layer and it is sufficient for the second recording layer to be so located in the vicinity of the first recording layer as to enable formation of a mixed region including the primary component element of the first recording layer and the primary component element of the second recording layer when the region is irradiated with a laser beam. Further, one or more other layers such as a dielectric layer may be interposed between the first recording layer and the second recording layer. However, in the case where one or more other layers such as a dielectric layer are interposed between the first recording layer and the second recording layer, the thickness of the interposed layers has to be equal to or thinner than 30 nm and preferably equal to or thinner than 20 nm.

In the present invention, it is preferable to form the second recording layer so as to be in contact with the first recording layer.

In the present invention, the optical recording medium may include one or more recording layers containing an element selected from the group consisting of C, Si, and Ge as a primary component.

Although the reason why a mixed region including the primary component element of the first recording layer and the primary component element of the second recording layer can be formed when irradiated with a laser beam is not altogether clear, it is reasonable to conclude that the primary component elements of the first and second recording layers are partially or totally fused or diffused, thereby forming a region where the primary component elements of the first and second recording layers mix.

The reflection coefficient that the region thus formed by mixing the primary component elements of the first and second recording layers exhibits with respect to a laser beam for reproducing data and the reflection coefficient that other regions exhibit with respect to the laser beam for reproducing data are considerably different and, therefore, recorded data can be reproduced with high sensitivity by utilizing such large difference in the reflection coefficients.

Moreover, the inventors found that C, Si, and Ge put only a light load on the environment and that since C and Si are inexpensive materials, the cost of the optical recording medium can be lowered.

In a preferred aspect of the present invention, an optical recording medium further comprises a light transmission layer provided on a side opposite to the substrate with respect to the first recording layer and the second recording layer.

In a further preferred aspect of the present invention, an optical recording medium further comprises a first dielectric layer provided between the light transmission layer, and the first recording layer and the second recording layer, and a second dielectric layer provided between the first recording layer and the second recording layer, and the substrate.

According to this preferred aspect of the present invention, it is possible to reliably prevent the substrate or the light transmission layer from being deformed by heat when data is recorded therein by irradiation with a laser beam. Further, according to this preferred aspect of the present invention, since it is possible to prevent the element contained in the second recording layer as a primary component from being corroded, recorded data can be more effectively prevented from being degraded over the long term.

In a further preferred aspect of the present invention, an optical recording medium further comprises a reflective layer provided between the substrate and the second dielectric layer.

According to this preferred aspect of the present invention, it is possible to increase the difference in reflection coefficient between a recorded region and an unrecorded region by a multiple interference effect, thereby obtaining a higher reproduced signal (C/N ratio).

In the present invention, the first recording layer and the second recording layer are preferably formed so that a total thickness thereof is 2 nm to 30 nm, more preferably, 3 nm to 24 nm, most preferably, 5 nm to 12 nm.

In the present invention, at least one element selected from the group consisting of Cu, Au, Ag, Pd, Pt, Fe, Ti, Mo, W and Mg is preferably added to the first recording layer and/or the second recording layer. By adding at least one element selected from the group consisting of Cu, Au, Ag, Pd, Pt, Fe, Ti, Mo, W and Mg to the first recording layer and/or the second recording layer, it is possible to improve the surface smoothness of the first recording layer and/or the second recording layer and decrease the noise level of the reproduced signal.

In the present invention, it is preferable for an optical recording medium to be constituted as a write-once type optical recording medium.

The present invention can be also accomplished by a method for optically recording data in an optical recording medium comprising a step of projecting a laser beam having a wavelength of 350 nm to 450 nm onto an optical recording medium comprising a substrate, a first recording layer formed on the substrate and containing an element selected from the group consisting of C, Si, and Ge as a primary component, and a second recording layer located in the vicinity of the first recording layer and containing an element selected from the group consisting of C, Si, and Ge and different from the element contained as a primary component in the first recording layer as a primary component, thereby mixing the element contained in the first recording layer as a primary component and the element contained in the second recording layer as a primary component to form a record mark.

In a preferred aspect of the present invention, the method for optically recording data in an optical recording medium includes the steps of employing an objective lens and a laser beam whose numerical aperture NA and wavelength λ satisfy λ/NA ≤ 640 nm, and projecting the laser beam onto the optical recording medium via the objective lens, thereby recording data in the first recording layer and the second recording layer.

According to this preferred aspect of the present invention, since it is possible to reduce the beam spot of the laser beam projected onto the optical recording medium, the recording density of data can be markedly improved.

The above and other objects and features of the present invention will become apparent from the following description made with reference to the accompanying drawings.

### BRIEF DESCRIPTION OF THE DRAWINGS

Figure 1 is a schematic cross-sectional view showing the structure of an optical recording medium that is a preferred embodiment of the present invention.
Figure 2 (a) is a schematic enlarged cross-sectional view of the optical recording medium shown in Figure 1.
Figure 2 (b) is a schematic enlarged cross-sectional view showing an optical recording medium after data have been recorded therein.

### DESCRIPTION OF THE PREFERRED EMBODIMENTS

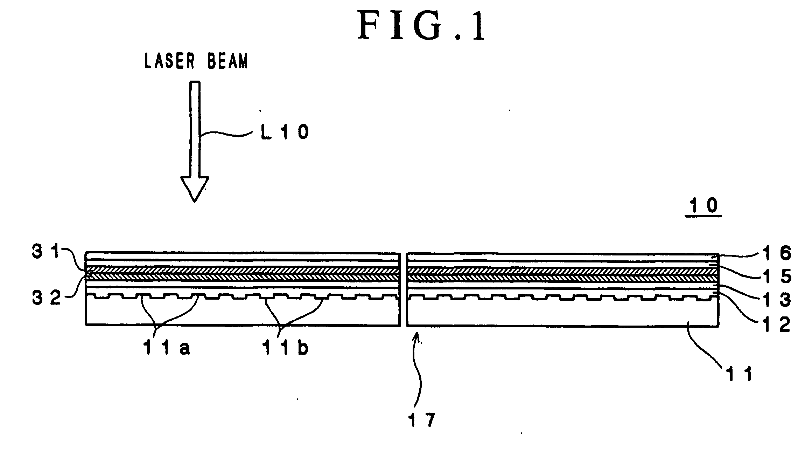

Figure 1 is a schematic cross-sectional view showing the structure of an optical recording medium that is a preferred embodiment of the present invention.

As shown in Figure 1, an optical recording medium 10 according to this embodiment is constituted as a write-once type optical recording medium and includes a substrate 11, a reflective layer 12 formed on the surface of the substrate 11, a second dielectric layer 13 formed on the surface of the reflective layer 12, a second recording layer 32 formed on the surface of the second dielectric layer 13, a first recording layer 31 formed on the surface of the second recording layer 32, a first dielectric layer 15 formed on the surface of the first recording layer 31 and a light transmission layer 16 formed on the surface of the first dielectric layer 15.

As shown in Figure 1, a center hole is formed at a center portion of the optical recording medium 10.

In this embodiment, as shown in Figure 1, a laser beam L10 is projected onto the surface of the light transmission layer 16, thereby recording data in the optical recording medium 10 or reproducing data from the optical recording medium 10.

The substrate 11 serves as a support for ensuring mechanical strength required for the optical recording medium 10.

The material used to form the substrate 11 is not particularly limited insofar as the substrate 11 can serve as the support of the optical recording medium 10. The substrate 11 can be formed of glass, ceramic, resin or the like. Among these, resin is preferably used for forming the substrate 11 since resin can be easily shaped. Illustrative examples of resins suitable for forming the substrate 40 include polycarbonate resin, acrylic resin, epoxy resin, polystyrene resin, polyethylene resin, polypropylene resin, silicone resin, fluoropolymers, acrylonitrile butadiene styrene resin, urethane resin and the like. Among these, polycarbonate resin is most preferably used for forming the substrate 11 from the viewpoint of easy processing, optical characteristics and the like.

In this embodiment, the substrate 11 has a thickness of about 1.1 mm.

The shape of the substrate 11 is not particularly limited but is normally disk-like, card-like or sheet-like.

As shown in Figure 1, grooves 11a and lands 11b are alternately formed on the surface of the substrate 11. The grooves 11a and/or lands 11b serve as a guide track for the laser beam L10 when data are to be recorded or when data are to be reproduced.

The reflective layer 12 serves to reflect the laser beam L10 entering through the light transmission layer 16 so as to emit it from the light transmission layer 16.

The thickness of the reflective layer 12 is not particularly limited but is preferably from 10 nm to 300 nm, more preferably from 20 nm to 200 nm.

The material used to form the reflective layer 12 is not particularly limited insofar as it can reflect a laser beam, and the reflective layer 12 can be formed of Mg, Al, Ti, Cr, Fe, Co, Ni, Cu, Zn, Ge, Ag, Pt, Au and the like. Among these materials, it is preferable to form the reflective layer 12 of a metal material having a high reflection characteristic, such as Al, Au, Ag, Cu or alloy containing at least one of these metals, such as alloy of Al and Ti.

The reflective layer 12 is provided in order to increase the difference in reflection coefficient between a recorded region and an unrecorded region by a multiple interference effect when the laser beam L10 is used to optically reproduce data from the first recording layer 31 and the second recording layer 32, thereby obtaining a higher reproduced signal (C/N ratio).

The first dielectric layer 15 and the second dielectric layer 13 serve to protect the first recording layer 31 and the second recording layer 32. Degradation of optically recorded data can be prevented over a long period by the first dielectric layer 15 and the second dielectric layer 13. Further, since the second dielectric layer 13 also serves to prevent the substrate 11 and the like from being deformed by heat, it is possible to effectively prevent jitter and the like from becoming worse due to the deformation of the substrate 11 and the like.

The dielectric material used to form the first dielectric layer 15 and the second dielectric layer 13 is not particularly limited insofar as it is transparent and the first dielectric layer 15 and the second dielectric layer 13 can be formed of a dielectric material containing oxide, sulfide, nitride or a combination thereof, for example, as a primary component. More specifically, in order to prevent the substrate 11 and the like from being deformed by heat and thus protect the first recording layer 31 and the second recording layer 32, it is preferable for the first dielectric layer 15 and the second dielectric layer 13 to contain at least one kind of dielectric material selected from the group consisting of Al₂O₃, AlN, ZnO, ZnS, GeN, GeCrN, CeO, SiO, SiO₂, SiN and SiC as a primary component and it is more preferable for the first dielectric layer 15 and the second dielectric layer 13 to contain ZnS · SiO₂ as a primary component.

The first dielectric layer 15 and the second dielectric layer 13 may be formed of the same dielectric material or of different dielectric materials. Moreover, at least one of the first dielectric layer 15 and the second dielectric layer 13 may have a multi-layered structure including a plurality of dielectric films.

In this specification, the statement that a dielectric layer contains a certain dielectric material as a primary component means that the dielectric material is maximum among dielectric materials contained in the dielectric layer. ZnS · SiO₂ means a mixture of ZnS and SiO₂.

The thickness of the first dielectric layer 15 and the second dielectric layer 13 is not particularly limited but is preferably from 3 nm to 200 nm. If the first dielectric layer 15 or the second dielectric layer 13 is thinner than 3 nm, it is difficult to obtain the above-described advantages. On the other hand, if the first dielectric layer 15 or the second dielectric layer 13 is thicker than 200 nm, it takes a long time to form the first dielectric layers 15 and the second dielectric layers 13, thereby lowering the productivity of the optical recording medium 10, and cracks may be generated in the optical recording medium 10 owing to stress present in the first dielectric layers 15 and/or the second dielectric layer 13.

The first recording layer 31 and the second recording layer 32 are adapted for recording a record mark and data therein. In this embodiment, the first recording layer 31 is disposed on the side of the light transmission layer 16 and the second recording layer 32 is disposed on the side of the substrate 11.

In this embodiment, the first recording layer 31 contains an element selected from the group consisting of C, Si, and Ge as a primary component and the second recording layer 32 contains an element selected from the group consisting of C, Si, and Ge and different from the element contained as a primary component in the first recording layer 31 as a primary component.

Since the light absorbance of each of C, Si, and Ge with respect to a red laser beam having a wavelength X of 550 nm to 850 nm is equal to or lower than about 20 % and that with respect to a blue laser beam having a wavelength λ of 350 nm to 450 nm is equal to or higher than about 40 %, each of C, Si, and Ge is suitable for forming recording layers of a next generation type optical recording medium in which a blue laser beam having a wavelength X of 350 nm to 450 nm is used for recording data therein.

Further, each of C, Si, and Ge puts only a light load on the environment and since C and Si are inexpensive materials, the cost of the optical recording medium 10 can be lowered.

At least one element selected from the group consisting of Cu, Au, Ag, Pd, Pt, Fe, Ti, Mo, W and Mg is preferably added to one or both of the first recording layer and second recording layer. By adding at least one element selected from the group consisting of Cu, Au, Ag, Pd, Pt, Fe, Ti, Mo, W and Mg to the first recording layer and/or the second recording layer, it is possible to improve the surface smoothness of the first recording layer or the second recording layer and decrease the noise level of the reproduced signal. Further, these elements put only a light load on the environment and, therefore, there is no risk of harm to the global atmosphere.

The surface smoothness of the first recording layer 31 irradiated with the laser beam L10 becomes worse as the total thickness of the first recording layer 31 and the second recording layer 32 becomes thicker. As a result, the noise level of the reproduced signal becomes higher and the recording sensitivity is lowered. On the other hand, in the case where the total thickness of the first recording layer 31 and the second recording layer 32 is too small, the change in reflection coefficient between before and after irradiation with the laser beam L10 is small, so that a reproduced signal having high strength (C/N ratio) cannot be obtained. Moreover, it becomes difficult to control the thickness of the first recording layer 31 and the second recording layer 32.

Therefore, in this embodiment, the first recording layer 31 and the second recording layer 32 are formed so that the total thickness thereof is from 2 nm to 30 nm. In order to obtain a reproduced signal having higher strength (C/N ratio) and further decrease the noise level of the reproduced signal, the total thickness of the first recording layer 31 and the second recording layer 32 is preferably from 3 nm to 24 nm and more preferably 5 nm to 12 nm.

The individual thicknesses of the first recording layer 31 and the second recording layer 32 are not particularly limited but in order to considerably improve the recording sensitivity and greatly increase the change in reflection coefficient between before and after irradiation with the laser beam L10, the thickness of the first recording layer 31 is preferably from 1 nm to 30 nm and the thickness of the second recording layer 32 is preferably from 1 nm to 30 nm. Further, it is preferable to define the ratio of the thickness of the first recording layer 31 to the thickness of the second recording layer 32 (thickness of first recording layer 31 / thickness of second recording layer 32) to be from 0.2 to 5.0.

The light transmission layer 16 serves to transmit a laser beam L10 and preferably has a thickness of 10 µm to 300 µm. More preferably, the light transmission layer 16 has a thickness of 50 µm to 150 µm.

The material used to form the light transmission layer 16 is not particularly limited but in the case where the light transmission layer 16 is to be formed by the spin coating process or the like, ultraviolet ray curable resin, electron beam curable resin or the like is preferably used. More preferably, the light transmission layer 16 is formed of ultraviolet ray curable resin.

The light transmission layer 16 may be formed by adhering a sheet made of light transmittable resin to the surface of the first dielectric layer 15 using an adhesive agent.

The optical recording medium 10 having the above-described configuration can, for example, be fabricated in the following manner.

The reflective layer 12 is first formed on the surface of the substrate 11 formed with the grooves 11a and lands 11b.

The reflective layer 12 can be formed by a gas phase growth process using chemical species containing elements for forming the reflective layer 12. Illustrative examples of the gas phase growth processes include vacuum deposition process, sputtering process and the like.

The second dielectric layer 13 is then formed on surface of the reflective layer 12.

The second dielectric layer 13 can be also formed by a gas phase growth process using chemical species containing elements for forming the second dielectric layer 13. Illustrative examples of the gas phase growth processes include vacuum deposition process, sputtering process and the like.

The second recording layer 32 is further formed on the second dielectric layer 13. The second recording layer 32 can be also formed by a gas phase growth process using chemical species containing elements for forming the second recording layer 32.

The first recording layer 31 is then formed on the second recording layer 32. The first recording layer 31 can be also formed by a gas phase growth process using chemical species containing elements for forming the first recording layer 31.

In this embodiment, since the first recording layer 31 and the second recording layer 32 are formed so that the total thickness thereof is from 2 nm to 30 nm, it is possible to improve the surface smoothness of the first recording layer 31.

The first dielectric layer 15 is then formed on the first recording layer 31. The first dielectric layer 15 can be also formed by a gas phase growth process using chemical species containing elements for forming the first dielectric layer 15.

Finally, the light transmission layer 16 is formed on the first dielectric layer 15. The light transmission layer 16 can be formed, for example, by applying an acrylic ultraviolet ray curable resin or epoxy ultraviolet ray curable resin adjusted to an appropriate viscosity onto the surface of the second dielectric layer 15 by spin coating to form a coating layer and irradiating the coating layer with ultraviolet rays to cure the coating layer.

Thus, the optical recording medium 10 was fabricated.

Data are recorded in the optical recording medium 10 of the above-described configuration, in the following manner, for example.

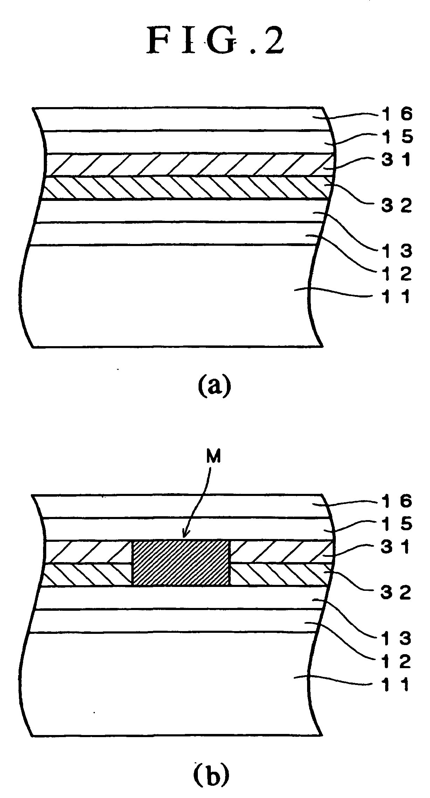

As shown in Figure 1 and 2(a), the first recording layer 31 and the second recording layer 32 are first irradiated via the light transmission layer 16 with a laser beam L10 having predetermined power.

In order to record data with high recording density, it is preferable to project a laser beam L10 having a wavelength X of 350 nm to 450 nm onto the optical recording medium 10 via an objective lens (not shown) having a numerical aperture NA of 0.7 or more and it is more preferable that λ/NA be equal to or smaller than 640 nm.

In this embodiment, a laser beam L10 having a wavelength X of 405 nm is projected onto the optical recording medium 10 via an objective lens having a numerical aperture NA of 0.85.

As shown in Figure 2(b), this results in formation at the region irradiated with the laser beam L10 of a record mark M composed of a mixture of the primary component element of the first recording layer 31 and the primary component element of the second recording layer 32.

When the primary component elements of the first recording layers 31 and 32 are mixed, the reflection coefficient of the region markedly changes. Since the reflection coefficient of the region of the thus formed record mark M is therefore greatly different from that of the region surrounding the record mark M, it is possible to obtain a high reproduced signal (C/N ratio) when optically recorded information is reproduced.

When the laser beam L10 is projected, the first recording layer 31 and the second recording layer 32 are heated by the laser beam L10. In this embodiment, however, the first dielectric layer 15 and the second dielectric layer 13 are disposed outward of the first recording layer 31 and the second recording layer 32. Deformation of the substrate 11 and the light transmission layer 16 by heat is therefore effectively prevented.

According to this embodiment, the first recording layer 31 contains an element selected from the group consisting of C, Si, and Ge as a primary component and the second recording layer 32 contains an element selected from the group consisting of C, Si, and Ge and different from the element contained as a primary component in the first recording layer 31 as a primary component, and when the first recording layer 31 and the second recording layer 32 are irradiated with the laser beam L10 of a predetermined power via the light transmission layer 16, the element contained in the first recording layer 31 as a primary component and the element contained in the second recording layer 32 as a primary component are mixed at a region irradiated with the laser beam L10 as shown in Figure 2 (b), thereby forming a record mark M composed of a mixture of the element contained in the first recording layer 31 as a primary component and the element contained in the second recording layer 32 as a primary component, and since the reflection coefficient of the region of the thus formed record mark M is greatly different from that of the region surrounding the record mark M, it is possible to obtain a high reproduced signal (C/N ratio) when optically recorded information is reproduced.

Further, since the light absorbance of each of C, Si, and Ge with respect to a blue laser beam having a wavelength λ of 350 nm to 450 nm is equal to or higher than about 40 %, the first recording layer 31 and the second recording layer 32 of the optical recording medium 10 according to this embodiment efficiently absorb a laser beam having a wavelength λ of 350 nm to 450 nm used for recording data in a next generation type optical recording medium, and it is therefore possible to quickly form a record mark to record data therein.

Moreover, according to this embodiment, since the element contained in the first recording layer 31 as a primary component and the element contained in the second recording layer 32 as a primary component put only a light load on the environment, there is no risk of harm to the global atmosphere.

### WORKING EXAMPLES

Hereinafter, working examples will be set out in order to further clarify the advantages of the present invention. Some of the examples use Sn, which does not fall under the present invention when used as a primary component.

### Working Example 1

An optical recording medium was fabricated in the following manner.

A polycarbonate substrate having a thickness of 1.1 mm and a diameter of 120 mm was first set on a sputtering apparatus: Then, a reflective layer containing the mixture of Ag, Pd and Cu and having a thickness of 100 nm, a second dielectric layer containing a mixture of ZnS and SiO₂ and having a thickness of 28 nm, a second recording layer containing Zn as a primary component and having a thickness of 4 nm, a first recording layer containing Si as a primary component and having a thickness of 8 nm and a first dielectric layer containing the mixture of ZnS and SiO₂ and having a thickness of 22 nm were sequentially formed on the polycarbonate substrate using the sputtering process.

The mole ratio of ZnS to SiO₂ in the mixture of ZnS and SiO₂ contained in the first dielectric layer and the second dielectric layer was 80:20.

Further, the first dielectric layer was coated using the spin coating method with a resin solution prepared by dissolving acrylic ultraviolet ray curable resin in a solvent to form a coating layer and the coating layer was irradiated with ultraviolet rays, thereby curing the acrylic ultraviolet ray curable resin to form a light transmission layer having a thickness of 100 µm.

### Working Example 2

An optical recording medium was fabricated in the manner of Working Example 1, except that a first recording layer containing Si as the primary component and a second recording layer containing Ge as the primary component were formed.

### Working Example 3

An optical recording medium was fabricated in the manner of Working Example 1, except that a second recording layer containing C as the primary component was formed.

### Working Example 4

An optical recording medium was fabricated in the manner of Working Example 1, except that a first recording layer containing C as the primary component and a second recording layer containing Ge as the primary component were formed.

### Working Example 5

An optical recording medium was fabricated in the manner of Working Example 1, except that a first recording layer containing Si as the primary component and a second recording layer containing C as the primary component were formed.

### Working Example 6

An optical recording medium was fabricated in the manner of Working Example 1, except that a first recording layer containing C as the primary component was formed.

### Working Example 7

An optical recording medium was fabricated in the manner of Working Example 1, except that a first recording layer containing Sn as a primary component was formed.

### Working Example 8

An optical recording medium was fabricated similarly to Working Example 1, except that a first recording layer containing Sn as a primary component and a second recording layer containing Ge as a primary component were formed.

### Working Example 9

An optical recording medium was fabricated similarly to Working Example 1, except that a first recording layer containing Si as a primary component and a second recording layer containing Sn as a primary component were formed.

### Working Example 10

An optical recording medium was fabricated similarly to Working Example 1, except that a first recording layer containing Sn as a primary component and a second recording layer containing Si as a primary component were formed.

Data were recorded in the optical recording media fabricated in Working Examples 1 to 10 in the following manner.

Specifically, the optical recording media fabricated in accordance with Working Examples 1 to 10 were sequentially set in a DDU1000 optical recording medium evaluation apparatus manufactured by Pulstec Industrial Co., Ltd. and data was optically recorded therein under the following conditions.

A blue laser beam having a wavelength of 405 nm was employed as the laser beam for recording data and the laser beam was condensed onto each of the optical recording media via the light transmission layer using an objective lens whose numerical aperture was 0.85, and data were recorded therein.

The recording of data was conducted by varying the power of the laser beam for each optical recording medium of the respective Working Examples 1 to 10. The power of the laser beam was defined as the power of the laser beam on the surface of the light transmission layer.

The recording signal conditions were as follows.
Modulation Code: (1.7) RLL
Channel Bit Length: 0.12 µm
Recording Linear Velocity: 5.3 m/sec
Channel Clock: 66 MHz
Recording Signal: 2T signal and 8T signal

Data recorded in each of the optical recording media were then reproduced using the optical recording medium evaluation apparatus mentioned above and the C/N ratio of the reproduced signal was measured. When data were reproduced, the wavelength of the laser beam was set at 405 nm and the numerical aperture of the objective lens was set at 0.85.

Thus, the maximum C/N ratio and the power of the laser beam at which the reproduced signal having the maximum C/N ratio was obtained were measured for each of the optical recording media.

The measurement results are shown in Table 1.

The maximum power of the laser beam of the optical recording medium evaluating apparatus used for the experiment was 10.0 mW. Therefore, when the C/N ratio did not saturate even though the power of the laser beam was increased up to 10.0 mW, it was deemed that the power of the laser at which the reproduced signal having the maximum C/N ratio would be obtained exceeded 10.0 mW. This is indicated by designating the power value of the laser beam as 10.0 mW affixed with an asterisk.

**Table 1**

| | First Recording Layer | Second Recording Layer | 2T C/N (dB) | 8T C/N (dB) | Laser Beam Power (mW) |
|---|---|---|---|---|---|
| Working Example 1 | Ge | Si | 24.0 | 46.6 | 10.0* |
| Working Example 2 | Si | Ge | 31.8 | 41.3 | 8.0 |
| Working Example 3 | Ge | C | 25.2 | 46.1 | 7.0 |
| Working Example 4 | C | Ge | 24.2 | 45.4 | 9.0 |
| Working Example 5 | Si | C | 31.5 | 42.1 | 7.0 |
| Working Example 6 | C | Si | 31.6 | 43.9 | 10.0* |
| Working Example 7 | Ge | Sn | 29.0 | 41.4 | 8.5 |
| Working Example 8 | Sn | Ge | 21.0 | 50.6 | 10.0* |
| Working Example 9 | Si | Sn | 34.4 | 49.6 | 6.0 |
| Working Example 10 | Sn | Si | 32.6 | 42.1 | 5.0 |

As apparent from Table 1, it was found that the C/N ratio of the reproduced signal could be measured in each of the optical recording media fabricated in accordance with Working Examples 1 to 10 and that data could be recorded therein using the laser beam having a wavelength of 405 nm.

Further, the power of the laser beam at which the reproduced signal having the maximum C/N ratio was obtained was less than 10 mW in each of the optical recording media fabricated in accordance with Working Examples 2 to 5, 7, 9 and 10, demonstrating that the optical recording media fabricated in accordance with Working Examples 2 to 5, 7, 9 and 10 had excellent recording sensitivity.

The present invention has thus been shown and described with reference to specific embodiments and working examples. However, it should be noted that the present invention is in no way limited to the details of the described arrangements but changes and modifications may be made without departing from the scope of the appended claims.

For example, although the first recording layer 31 and the second recording layer 32 are formed in contact with each other in the above described embodiment and working examples, it is not absolutely necessary to form the first recording layer 31 and the second recording layer 32 in contact with each other but it is sufficient for the second recording layer 32 to be so located in the vicinity of the first recording layer 31 as to enable formation of a mixed region including the primary component element of the first recording layer 31 and the primary component element of the second recording layer 32 when the region is irradiated with a laser beam. Further, one or more other layers such as a dielectric layer may be interposed between the first recording layer 31 and the second recording layer 32.

Furthermore, although the optical recording medium 10 in the above described embodiment and working examples includes the first recording layer 31 and the second recording layer 32, the optical recording medium may include one or more recording layers containing an element selected from the group consisting of C, Si, and Ge as a primary component.

Moreover, although the first recording layer 31 is disposed on the side of the light transmission layer 16 and the second recording layer 32 is disposed on the side of the substrate 11 in the above described embodiment and working examples, it is possible to dispose the first recording layer 31 on the side of the substrate 11 and the second recording layer 32 on the side of the light transmission layer 16.

Further, the optical recording medium 10 in the above described embodiment and working examples includes the first dielectric layer 15 and the second dielectric layer 13 and the first recording layer 31 and the second recording layer 32 are disposed between the first dielectric layer 15 and the second dielectric layer 13. However, it is not absolutely necessary for the optical recording medium 10 to include the first dielectric layer 15 and the second dielectric layer 13, i.e., the optical recording medium 10 may include no dielectric layer. Further, the optical recording medium 10 may include a single dielectric layer and in such case the dielectric layer may be disposed on either the side of the substrate 11 or the side of the light transmission layer 16 with respect to the first recording layer 31 and the second recording layer 32.

Furthermore, although the first recording layer 31 and the second recording layer 32 are formed so as to have the same thickness in the above described embodiment and working examples, it is not absolutely necessary to form the first recording layer 31 and the second recording layer 32 so as to have the same thickness.

Moreover, in the above described embodiment and Working Examples 1 to 20, although the optical recording medium 10 is provided with the reflective layer 12, if the level of reflected light in the region where a record mark M is formed by the mixing an element contained in the first recording layer as a primary component and the element contained in the second recording layer as a primary component and the level of reflected light in regions onto which the laser beam was not projected greatly differ from each other, the reflective layer 12 may be omitted.

Further, in the above described embodiment, although description was made regarding a next generation type optical recording medium including a very thin light transmission layer and adapted to be irradiated with a laser beam L10 from the side of the light transmission layer, the present invention is not limited to application to such an optical recording medium and the present invention can be applied to any of various DVD type optical recording media insofar as the optical recording medium is constituted so that data can be recorded therein using a laser beam having a wavelength of 350 nm to 450 nm.

According to the present invention, it is possible to provide an optical recording medium constituted so as to record data therein and reproduce data therefrom by projecting a laser beam having a wavelength of 350 nm to 450 nm thereonto, which includes two or more recording layers and is capable of decreasing noise level and improving C/N ratio of a reproduced signal, and a method for optically recording data in the same.

## Claims

1. An optical recording medium (10) comprising
a substrate (11),
a first recording layer (31) formed on said substrate (11) and containing an element as a primary component, a primary component being a component whose content is maximum among the elements in the layer,
a second recording layer (32) located in the vicinity of said first recording layer (31) and containing an element as a primary component and different from the element contained as a primary component in said first recording layer (31, and
the optical recording medium being constituted so that when it is irradiated with a laser beam (L10) the element contained in the first recording layer as a primary component and the element contained in the second recording layer as a primary component are mixed to form a record mark (M),
**characterized in that**
the primary component of said first recording layer (31) is an element selected from a group consisting of C, Si and Ge
the primary component of said second recording layer (32) is an element selected from a group consisting of C, Si and Ge
and said laser beam (L10) having a wavelength of 350 nm to 450 nm.

2. An optical recording medium (10) in accordance with claim 1, wherein the second recording layer (32) is formed so as to be in contact with the first recording layer (31).

3. An optical recording medium in accordance with claim 1 or 2 which further comprises a light transmission layer (16) provided on a side opposite to the substrate (11) with respect to the first recording layer (32) and the second recording layer (32).

4. An optical recording medium (10) in accordance with claim 3 which further comprises a first dielectric layer (15) provided between the light transmission layer (16), and the first recording layer (31) and the second recording layer (32), and
a second dielectric layer (13) provided between the second recording layer (32) and the substrate.

5. An optical recording medium (10) in accordance with claim 4 which further comprises a reflective layer (12) provided between the substrate (11) and the second dielectric layer (13).

6. An optical recording medium (10) in accordance with any one of claims 1 to 5 wherein which is constituted as a write-once type optical recording medium.

7. A method for optically recording data in an optical recording medium (10) comprising a step
of projecting a laser beam (L10) onto
an optical recording medium (10) comprising
a substrate (11),
a first recording layer (31) formed on said substrate and containing an element as a primary component, a primary component being a component whose content is maximum among the elements in the layer,
and a second recording layer (32) located in the vicinity of said first recording layer and containing an element a primary component and different from the element contained as a primary component in the first recording layer (31),
thereby mixing the element contained in said first recording layer as a primary component and the element contained in the second recording layer as a primary component to form a record mark (M),
**characterized in that**
the primary component of said first recording layer (31) is an element selected from a group consisting of C, Si and Ge
the primary component of said second recording layer (32) is an element selected from a group consisting of C, Si and Ge
and said laser beam (L10) having a wavelength of 350 nm to 450 nm.

8. A method for optically recording data in an optical recording medium (10) in accordance with claim 7 which comprises steps of employing an objective lens and a laser beam whose numerical aperture NA and wavelength λ satisfy λ/NA = 640 nm, and
projecting the laser beam (L10) onto the optical recording medium (10) via the objective lens, thereby recording data in the first recording layer (31) and the second recording layer (32).

9. A method for optically recording data in an optical recording medium (10) in accordance with claim 7 or 8,
wherein the optical recording medium further comprises a light transmission layer (16) provided on a side opposite to the substrate (11) with respect to the first recording layer (31) and the second recording layer (32) and the laser beam (L10) is projected onto the light transmission layer (16).

## Patentansprüche

1. Optisches Aufzeichnungsmedium (10) mit:
- einem Substrat (11),
- einer ersten Aufzeichnungsschicht (31), welche auf dem Substrat (11) ausgebildet ist und die ein Element als primäre Komponente enthält, wobei die primäre Komponente eine Komponente ist, dessen Gehalt maximal innerhalb der Elemente der Schicht ist,
- eine zweite Aufzeichnungsschicht (32), die benachbart zur ersten Aufzeichnungsschicht (31) liegt und die ein Element als primäre Komponente aufweist und das unterschiedlich zum Element ist, das als primäre Komponente in der ersten Aufzeichnungsschicht (31) enthalten ist, und
- das optisches Aufzeichnungsmedium derart ausgebildet ist, dass, wenn es mit einem Laserstrahl (L10) bestrahlt wird, das Element, das in der ersten Aufzeichnungsschicht als primäre Komponente enthalten ist, und das Element, das in der zweiten Aufzeichnungsschicht als primäre Komponente enthalten ist, vermischt werden, um einen Aufzeichnungsmarker (M) zu bilden,
**dadurch gekennzeichnet, dass**
die primäre Komponente der ersten Aufzeichnungsschicht (31) ein Element ist, welches aus der Gruppe, die C, Si und Ge umfasst, ausgewählt ist, wobei die primäre Komponente der zweiten Aufzeichnungsschicht (32) ein Element ist, welches aus der Gruppe, die C, Si und Ge umfasst, ausgewählt ist, und der Laserstrahl (L10) eine Wellenlänge von 350 nm bis 450 nm aufweist.

2. Optisches Aufzeichnungsmedium nach Anspruch 1, wobei die zweite Aufzeichnungsschicht (32) derart ausgebildet ist, dass sie in Kontakt zur ersten Aufzeichnungsschicht (31) steht.

3. Optisches Aufzeichnungsmedium nach Anspruch 1 oder 2, welches weiterhin eine lichtdurchlässige Schicht (16) umfasst, die auf der dem Substrat (11) gegenüberliegenden Seite hinsichtlich der ersten Aufzeichnungsschicht (31) und der zweiten Aufzeichnungsschicht (32) angeordnet ist.

4. Optisches Aufzeichnungsmedium (10) nach Anspruch 3, das weiterhin eine erste dielektrische Schicht (15) umfasst, die zwischen der lichtdurchlässigen Schicht (16) und der ersten Aufzeichnungsschicht (31) und der zweiten Aufzeichnungsschicht (32) angeordnet ist, und eine zweite dielektrische Schicht (13), die zwischen der zweiten Aufzeichnungsschicht (32) und dem Substrat angeordnet ist.

5. Optisches Aufzeichnungsmedium (10) nach Anspruch 4, welches weiterhin eine reflektierende Schicht (12), umfasst, die zwischen dem Substrat (11) und der zweiten dielektrischen Schicht (13) angeordnet ist.

6. Optisches Aufzeichnungsmedium (10) nach einem der Ansprüche 1 bis 5, durch welche ein optisches Aufzeichnungsmedium vom Typ "Einmal-Schreiben" begründet wird.

7. Verfahren zum optischen Aufzeichnen von Daten auf einem optischen Aufzeichnungsmedium (10) mit den Schritten:
Projektion eines Laserstrahls (L10) auf ein optisches Aufzeichnungsmedium (10) mit:
- einem Substrat (11),
- einer ersten Aufzeichnungsschicht (31), welche auf dem Substrat ausgebildet ist und die ein Element als primäre Komponente enthält, wobei die primäre Komponente eine Komponente ist, dessen Gehalt maximal innerhalb der Elemente der Schicht ist,
- einer zweiten Aufzeichnungsschicht (32), die benachbart zur ersten Aufzeichnungsschicht (31) liegt und die ein Element als primäre Komponente aufweist und das unterschiedlich zum Element ist, das als primäre Komponente in der ersten Aufzeichnungsschicht (31) enthalten ist,
wobei das Element, das in der ersten Aufzeichnungsschicht als primäre Komponente enthalten ist, und das Element, das in der zweiten Aufzeichnungsschicht als primäre Komponente enthalten ist, gemischt werden, um einen Aufzeichnungsmarker (M) bilden
**dadurch gekennzeichnet, dass**
die primäre Komponente der ersten Aufzeichnungsschicht (31) ein Element ist, welches aus der Gruppe, die C, Si und Ge umfasst, ausgewählt ist, wobei die primäre Komponente der zweiten Aufzeichnungsschicht (32) ein Element ist, welches aus der Gruppe, die C, Si und Ge umfasst, ausgewählt ist, und der Laserstrahl (L10) eine Wellenlänge von 350 nm bis 450 nm aufweist.

8. Verfahren für ein optisches Aufzeichnen von Daten auf einem optischen Aufzeichnungsmedium (10) nach Anspruch 7, das Schritte des Einsatzes einer Objektivlinse und eines Laserstrahls, dessen numerische Apertur NA und Wellenlänge λ λ/NA = 640 nm genügen, und eine Projektion des Laserstrahls (L10) auf das optische Aufzeichnungsmedium (10) durch die Objektivlinse umfasst, wobei die Daten in der ersten Aufzeichnungsschicht (31) und der zweiten Aufzeichnungsschicht (32) aufgezeichnet werden.

9. Verfahren zum optischen Aufzeichnen von Daten in einem optischen Aufzeichnungsmedium (10) nach Anspruch 7 oder 8, wobei das optische Aufzeichnungsmedium weiterhin eine lichtdurchlässige Schicht (16) umfasst, welche auf einer dem Substrat gegenüberliegenden Seite hinsichtlich der ersten Aufzeichnungsschicht (31) und der zweiten Aufzeichnungsschicht (32) angeordnet ist, und der Laserstrahl (L10) auf die lichtdurchlässige Schicht projiziert wird.

## Revendications

1. Support d'enregistrement optique (10), comprenant :
un substrat (11),
une première couche d'enregistrement (31) formée sur ledit substrat (11) et contenant un élément en tant que composant primaire, un composant primaire étant un composant dont la teneur est maximale parmi les éléments dans la couche,
une seconde couche d'enregistrement (32) située à proximité de ladite première couche d'enregistrement (31) et contenant un élément en tant que composant primaire et qui est différent de l'élément contenu en tant que composant primaire dans ladite première couche d'enregistrement (31), et
le support d'enregistrement optique étant constitué de telle manière que, lorsqu'il reçoit le rayonnement d'un faisceau laser (L10), l'élément contenu dans la première couche d'enregistrement en tant que composant primaire, et l'élément contenu dans la seconde couche d'enregistrement en tant que composant primaire soient mélangés pour former un repère d'enregistrement (M),
**caractérisé en ce que**
le composant primaire de ladite première couche d'enregistrement (31) est un élément sélectionné à partir d'un groupe composé du C, du Si et du Ge,
le composant primaire de ladite seconde couche d'enregistrement (32) est un élément sélectionné à partir d'un groupe composé du C, du Si et du Ge,
et ledit faisceau laser (L10) a une longueur d'onde de 350 nm à 450 nm.

2. Support d'enregistrement optique (10) selon la revendication 1, dans lequel la seconde couche d'enregistrement (32) est formée de manière à être en contact avec la première couche d'enregistrement (31).

3. Support d'enregistrement optique (10) selon la revendication 1 ou 2, qui comprend en outre une couche de transmission de lumière (16), située sur un côté à l'opposé du substrat (11) par rapport à la première couche d'enregistrement (31) et à la seconde couche d'enregistrement (32).

4. Support d'enregistrement optique (10) selon la revendication 3, qui comprend en outre une première couche diélectrique (15) située entre la couche de transmission de lumière (16), et la première couche d'enregistrement (31) et la seconde couche d'enregistrement (32), et
une seconde couche diélectrique (13), située entre la seconde couche d'enregistrement (32) et le substrat.

5. Support d'enregistrement optique (10) selon la revendication 4, qui comprend en outre une couche réfléchissante (12) prévue entre le substrat (11) et la seconde couche diélectrique (13).

6. Support d'enregistrement optique (10) selon l'une quelconque des revendications 1 à 5, qui est constitué en tant que support d'enregistrement optique du type non effaçable.

7. Procédé d'enregistrement optique de données dans un support d'enregistrement optique (10), comprenant une étape de projection d'un faisceau laser (L10) sur un support d'enregistrement optique (10) comprenant :
un substrat (11),
une première couche d'enregistrement (31) formée sur ledit substrat et contenant un élément en tant que composant primaire, un composant primaire étant un composant dont la teneur est maximale parmi les éléments dans la couche,
et une seconde couche d'enregistrement (32) située à proximité de ladite première couche d'enregistrement et contenant un élément en tant que composant primaire et qui est différent de l'élément contenu en tant que composant primaire et dans ladite première couche d'enregistrement (31),
mélangeant ainsi l'élément contenu dans ladite première couche d'enregistrement en tant que composant primaire, et l'élément contenu dans la seconde couche d'enregistrement en tant que composant primaire, pour former un repère d'enregistrement (M),
**caractérisé en ce que**
le composant primaire de ladite première couche d'enregistrement (31) est un élément sélectionné à partir d'un groupe composé du C, du Si et du Ge,
le composant primaire de ladite seconde couche d'enregistrement (32) est un élément sélectionné à partir d'un groupe composé du C, du Si et du Ge,
et ledit faisceau laser (L10) a une longueur d'onde de 350 nm à 450 nm.

8. Procédé d'enregistrement optique de données dans un support d'enregistrement optique (10) selon la revendication 7, qui comprend les étapes consistant à utiliser une lentille d'objectif et un faisceau laser, dont l'ouverture numérique NA et la longueur d'onde λ satisfont à la condition λ/NA = 640 nm, et
à projeter le faisceau laser (L10) sur le support d'enregistrement optique (10) au moyen de la lentille d'objectif, enregistrant ainsi des données dans la première couche d'enregistrement (31) et dans la seconde couche d'enregistrement (32).

9. Procédé d'enregistrement optique de données dans un support d'enregistrement optique (10) selon la revendication 7 ou 8, dans lequel le support d'enregistrement optique comprend en outre une couche de transmission de lumière (16) située sur un côté à l'opposé du substrat (11) par rapport à la première couche d'enregistrement (31) et à la seconde couche d'enregistrement (32), et le faisceau laser (L10) est projeté sur la couche de transmission de lumière (16).
